# EUROPÄISCHE PATENTSCHRIFT

(11) **EP 4 136 360 B1**
(45) Veröffentlichungstag und Bekanntmachung des Hinweises auf die Patenterteilung: **14.02.2024**
(21) Anmeldenummer: 21718816.8
(22) Anmeldetag: 08.04.2021
(51) Int. Cl.: F16C 29/00, F16C 29/04, F16C 29/10, F16C 29/12

(54) **SCHLITTEN FÜR EINE LINEARFÜHRUNG UND LINEARFÜHRUNG MIT EINEM SOLCHEN SCHLITTEN**
SLIDE FOR A LINEAR GUIDE, AND LINEAR GUIDE COMPRISING SUCH A SLIDE
GLISSIÈRE POUR GUIDE LINÉAIRE, ET GUIDE LINÉAIRE DOTÉ D'UNE TELLE GLISSIÈRE

(30) Priorität: 17.04.2020 DE 102020110563
(43) Veröffentlichungstag der Anmeldung: 22.02.2023
(73) Patentinhaber: Accuride International GmbH, 65582 Diez/Lahn (DE)
(72) Erfinder: NEIDHÖFER, Patrick, 56377 Seelbach (DE); NEUHAUS, Christoph, 56412 Niederelbert (DE); QUIREIN, Thomas, 65582 DIEZ (DE)
(74) Vertreter: WSL Patentanwälte Partnerschaft mbB
(86) Internationale Anmeldenummer: PCT/EP2021/059127
(87) Internationale Veröffentlichungsnummer: WO 2021/209301

(56) Entgegenhaltungen:
- DE-U1-202009 001 962

## Beschreibung

Die vorliegende Erfindung betrifft einen Schlitten für eine Linearführung, wobei die Linearführung einen solchen Schlitten und ein Schienenelement mit zwei zueinander hin zeigenden Laufflächen umfasst, wobei der Schlitten einen Grundkörper und eine Mehrzahl von Wälzkörpern aufweist, wobei die Mehrzahl von Wälzkörpern derart an dem Grundkörper aufgenommen ist, dass die Mehrzahl von Wälzkörpern auf den zweit Laufflächen des Schienenelements abrollbar sind oder gegenüber den zwei Laufflächen eine Gleitbewegung ausführen, wobei der Grundkörper eine Position eines jeden aus der Mehrzahl von Wälzkörpern in einer Auszugsrichtung relativ zu dem Grundkörper festlegt.

Die vorliegende Erfindung betrifft zu dem eine Linearführung mit einem derartigen Schlitten und einem Schienenelement.

Linearführungen mit einem Schlitten und einem Schienenelement, wobei zwischen dem Schlitten und den Laufflächen des Schienenelements an dem Schlitten festgelegte Wälzkörper vorgesehen sind, sind aus dem Stand der Technik bekannt. So zum Beispiel aus der DE 20 2009 001962 U1. Sie werden in unterschiedlichen Haushaltsgeräten, aber auch im Automobilbau und vielen weiteren Anwendungen eingesetzt. Um ein möglichst reibungsarmes Verschieben des Schlittens gegenüber dem Schienenelement zu ermöglichen, sind zwischen dem Schienenelement und dem Schlitten Wälzkörper angeordnet, wobei die Wälzkörper bei einer Relativbewegung des Schlittens und des Schienenelements auf der Oberfläche der Laufflächen des Schienenelements abrollen oder gegenüber der Oberfläche der Laufflächen eine Gleitbewegung ausführen. Die dabei entstehende Roll- und/oder Gleitreibung ist geringer als eine unmittelbare Gleitreibung zwischen dem Schlitten und dem Schienenelement. Allerdings ist es in einer solchen Konstruktion einer Linearführung schwierig, die zum Verschieben des Schlittens gegenüber dem Schienenelement notwendige Kraft präzise einzustellen. Zudem kann die Position des Schlittens relativ zu dem Schienenelement durch die Wälzkörper nicht präzise definiert werden.

Demgegenüber gibt es ein Bedürfnis nach einem Schlitten für eine Linearführung und eine Linearführung mit einem solchen Schlitten, welche die Nachteile der Linearführungen aus dem Stand der Technik reduziert.

Zur Lösung dieser Aufgabe wird erfindungsgemäß ein Schlitten für eine Linearführung der eingangs genannten Art vorgeschlagen, wobei der Schlitten weiterhin zwei Gleitelemente und ein Federelement aufweist, wobei jedes der zwei Gleitelemente in einer Hochrichtung senkrecht zu der Auszugsrichtung beweglich an dem Grundkörper gelagert ist, sodass jedes der zwei Gleitelemente mit jeweils einer der Laufflächen in Reibeingriff bringbar ist, und wobei das Federelement derart an dem Grundkörper gelagert ist, dass das Federelement beide Gleitelemente in der Hochrichtung voneinander weg vorspannt.

Die Grundidee der vorliegenden Erfindung ist es, an dem Schlitten zusätzlich zu der Mehrzahl von Wälzkörpern mindestens zwei Gleitelemente vorzusehen, welche durch ein ebenfalls an dem Schlitten vorgesehenes Federelement gegen die Laufflächen des Schienenelements vorgespannt sind. Entscheidend für die erfindungsgemäße Konstruktion ist, dass beide Gleitelemente mit diesem genau einen Federelement vorgespannt werden. Auf diese Weise wird eine definierte Reibkraft zwischen dem Schlitten, nämlich den an dem Schlitten vorgesehenen Gleitelementen, und dem Schienenelement bereitgestellt. Zudem positionieren die beiden Gleitelemente den Schlitten.

Die zwei Gleitelemente und das Federelement bilden eine funktionale Einheit, da genau ein Federelement die beiden Gleitelemente voneinander weg und damit auf die Laufflächen des Schienenelements vorspannt.

Die vorliegende Erfindung betrifft zunächst einmal einen derartigen Schlitten für eine Linearführung unabhängig von dem für die vollständige Linearführung notwendigen Schienenelement.

Der Grundkörper des Schlittens ist in einer Ausführungsform der Erfindung aus Metall oder aus Kunststoff hergestellt. Insbesondere eine Ausführungsform des Grundkörpers aus Kunststoff ermöglicht es, den Grundkörper kostengünstig, vorzugsweise in einem Stück (einstückig), beispielsweise durch Spritzgießen, in großen Stückzahlen zu fertigen. Zudem ermöglicht Kunststoff eine Gewichtsreduzierung.

An dem Grundkörper werden im eingebauten Zustand der Linearführung Elemente, wie beispielsweise eine Schublade in einem Kraftfahrzeug, montiert. Dazu weist der Grundkörper in einer Ausführungsform Gewindebohrungen oder Löcher auf, durch welche Schrauben zum Befestigen weiterer Elemente hindurchgreifen.

Unter einem Wälzkörper im Sinne der vorliegenden Anmeldung wird ein Rotationskörper verstanden, der als Element einer Führung die Reibung zwischen dem Schlitten und dem Schienenelement erheblich reduziert und damit eine Relativbewegung des Schlittens gegenüber dem Schienenelement erleichtert. Wälzkörper sind beispielsweise Kugeln, Rollen, Tonnen, Nadeln oder Kegel.

Der Grundkörper des Schlittens dient auch als Käfig für die Wälzkörper, indem Grundkörper die Positionen der Wälzkörper in der Auszugsrichtung relativ zu dem Grundkörper festlegt.

Im Sinne der vorliegenden Anmeldung bezeichnet die Auszugsrichtung diejenige Richtung, in welcher der Schlitten im eingebauten Zustand gegenüber dem Schienenelement linear verschiebbar ist.

Als Hochrichtung wird im Sinne der vorliegenden Anmeldung eine Richtung senkrecht zu der Auszugsrichtung verstanden, die sich im Wesentlichen parallel zu einem Schienenrücken des Schienenelements erstreckt. Mit anderen Worten ausgedrückt ist die Hochrichtung parallel zur Federkraft, welche das Federelement auf die beiden Gleitelemente ausübt.

In einer Ausführungsform der Erfindung sind das Federelement und vorzugsweise auch die Gleitelemente, in der Hochrichtung schwimmend an dem Grundkörper gelagert. Dies bedeutet, dass das Federelement sich in der Hochrichtung ausschließlich an den beiden Gleitelementen abstützt, nicht aber an dem Grundkörper des Schlittens. Auf diese Weise ist die Federkraft, welche auf die beiden Gleitelemente ausgeübt wird, unabhängig von der exakten Position des Grundkörpers in der Hochrichtung. Insbesondere ist in einer Ausführungsform jeweils auf die beiden Gleitelemente ausgeübte Federkraft gleich groß.

In einer Ausführungsform der Erfindung ist die von dem Federelement auf die Gleitelemente ausgeübte Federkraft einstellbar veränderbar. Eine solche Einstellbarkeit der Federkraft kann sowohl bei einer festen Lagerung des Federelements an dem Grundkörper als auch bei einer gegenüber dem Grundkörper schwimmenden Lagerung des Federelements realisiert sein. Eine Einstellbarkeit des Federelements bedeutet, dass die Federkraft entweder bevor der Schlitten montiert wird oder dann, wenn der Schlitten bereits an dem Schienenelement montiert ist, variiert und eingestellt werden kann. In einer Ausführungsform der Erfindung ist die Einstellbarkeit der Federkraft dadurch realisiert, dass für einen gegebenen Abstand der beiden Laufflächen des Schienenelements der Abstand der Widerlager für das Federelement an den beiden Gleitelementen einstellbar ist. So kann der Bauraum, welcher für die Feder zwischen den beiden Gleitelementen in der Hochrichtung zur Verfügung steht, eingestellt und die Federvorspannung der Gleitelemente variiert werden.

In einer Ausführungsform der Erfindung ist jedes der zwei Gleitelemente in der Auszugsrichtung, vorzugsweise symmetrisch, zwischen zwei Wälzkörpern angeordnet. Sind in der Auszugsrichtung links und rechts von dem jeweiligen Gleitelement Wälzkörper vorgesehen, so erfüllt das Gleitelement auch eine positionsstabilisierende Funktion im Hinblick auf die Positionierung des Grundkörpers des Schlittens relativ zu dem Schienenelement.

In einer Ausführungsform der Erfindung weist der Schlitten genau vier Wälzkörper auf, wobei jedes der zwei Gleitelemente zwischen zwei Wälzkörpern angeordnet ist.

In einer Ausführungsform ist jedes der beiden Gleitelemente symmetrisch zwischen mindestens zwei Wälzkörpern angeordnet.

In einer Ausführungsform der Erfindung ist das Federelement eine Spiralfeder. Spiralfedern lassen sich einfach und kostengünstig herstellen und mit einer definierten Federkraft verbauen. Dabei stützt sich in einer Ausführungsformen der Erfindung die Spiralfeder sowohl an dem einen als auch an dem anderen Gleitelement ab und drückt diese voneinander weg auf die Laufflächen des Schienenelements zu. Zudem leitet in einer Ausführungsform das Federelement keine Kräfte in den Grundkörper des Schlittens ein.

In einer Ausführungsform der Erfindung sind die beiden Gleitelemente aus Kunststoff, vorzugsweise durch Spritzgießen, hergestellt.

In einer Ausführungsform der Erfindung weist das Gleitelement einen T-förmigen Abschnitt auf, wobei der Querbalken der T-Form denjenigen Teil des Gleitelements bildet, welcher in Gleiteingriff mit der jeweiligen Lauffläche des Schienenelements kommt. Der vertikale Balken hingegen dient der Aufnahme des Federelements. Handelt es sich bei dem Federelement um eine Spiralfeder, so erstreckt sich der vertikale Balken in einer Ausführungsform in das Innere der Spiralfeder hinein.

In einer Ausführungsform weist das Geleitelement mindestens einen, insbesondere aber zwei, vorzugsweise zylindrische, Führungsstifte auf. Dieser Führungsstift greift in jeweils eine, vorzugsweise hohlzylindrische, Führungsbuchse in dem Grundkörper des Schlittens ein, so dass das Gleitelement eine Führung in der Auszugsrichtung erfährt, während es in der Hochrichtung schwimmend gelagert ist.

Zumindest eine der oben genannten Aufgaben wird auch durch eine Linearführung gelöst, wobei die Linearführung ein Schienenelement mit zwei zueinander hin zeigenden Laufflächen und einen Schlitten in einer der Ausführungsformen, so wie sie zuvor beschrieben wurden, umfasst. Die Mehrzahl von Wälzkörpern ist derart an dem Grundkörper aufgenommen, dass die Mehrzahl von Wälzkörpern auf den Laufflächen abrollt oder gegenüber den Laufflächen eine Gleitbewegung ausführt, sodass der Schlitten und das Schienenelement in der Auszugsrichtung linear gegeneinander verschiebbar sind, wobei jedes der zwei Gleitelemente mit jeweils einer der Laufflächen in Reibeingriff ist.

Unter einer Linearführung im Sinne der vorliegenden Erfindung wird jedwede Anordnung aus mindestens einem Schlitten und mindestens einem Schienenelement verstanden, wobei der Schlitten und das Schienenelement entlang einem linearen Weg gegeneinander verschiebbarsind. Insbesondere stellen ein Teilauszug und ein Vollauszug jeweils eine Ausführungsform einer Linearführung dar.

In einer Ausführungsform der Erfindung weist das Schienenelement einen Vorsprung auf und der Grundkörper weist einen Rastabschnitt auf. Dabei ist der Vorsprung derart angeordnet und ausgestaltet, dass er in einen Zwischenraum zwischen den beiden Laufflächen des Schienenelements hineinragt, wobei der Rastabschnitt in einer Richtung senkrecht zu der Auszugsrichtung elastisch verformbar ist und wobei der Rastabschnitt derart angeordnet ist, dass er in einer Position des Schlittens in der Auszugsrichtung relativ zu dem Schienenelement mit dem Vorsprung in Reibeingriff ist. Auf diese Weise lässt sich eine Verrastung des Schlittens gegenüber dem Schienenelement an einer oder mehreren Positionen in der Auszugsrichtung mit geringem Aufwand realisieren.

Während die Kombination aus Vorsprung und Rastabschnitt, zunächst als Option für die erfindungsgemäße Linearführung betrachtet werden, bildet ein eine Linearführung mit einem Schlitten und einem Schienenelement, wobei der Schlitten den Rastabschnitt aufweist und das Schienenelement den Vorsprung aufweist, so wie sie nachfolgend im Detail beschrieben werden, auch eine eigenständige Erfindung ohne, dass der Schlitten notwendigerweise die kennzeichnenden Merkmale des unabhängigen Anspruchs 1 dieser Anmeldung aufweist.

Die vorliegende Anmeldung betrifft daher auch eine Linearführung mit einem Schienenelement mit zwei zueinander hin zeigenden Laufflächen und einem Schlitten, wobei der Schlitten einen Grundkörper und eine Mehrzahl von Wälzkörpern aufweist, wobei die Mehrzahl von Wälzkörpern derart an dem Grundkörper aufgenommen ist, dass die Mehrzahl von Wälzkörpern auf den zweiten Laufflächen des Schienenelements abrollen, wobei der Grundkörper eine Position eines jeden aus der Mehrzahl von Wälzkörpern in der Auszugsrichtung relativ zu dem Grundkörper festlegt, wobei das Schienenelement einen Vorsprung aufweist und der Grundkörper einen Rastabschnitt aufweist, wobei der Vorsprung derart angeordnet und ausgestaltet ist, dass er in einen Zwischenraum zwischen den zwei Laufflächen hineinragt, wobei der Rastabschnitt in einer Richtung senkrecht zu der Auszugsrichtung elastisch verformbar ist und wobei der Rastabschnitt derart angeordnet ist, dass er in einer Position des Schlittens in der Auszugsrichtung relativ zu dem Schienenelement mit dem Vorsprung in Reibeingriff ist.

In einer Ausführungsform der Erfindung ist das Schienenelement zumindest abschnittsweise aus Metall, insbesondere aus Stahl oder Aluminium, oder aus Kunststoff hergestellt.

Ist das Schienenelement ein Schienenelement aus Stahl, so ist in einer Ausführungsform der Vorsprung als Sicke oder als Eindrückung in dem Schienenrücken des Schienenelements realisiert.

Insbesondere ist eine Ausführungsform bei welcher das Schienenelement einen Vorsprung aufweist für eine Realisierung mit einem Schlitten, der einen Grundkörper aus Kunststoff aufweist, geeignet. In einer Ausführungsform der Erfindung ist der Rastabschnitt in einer Richtung senkrecht zu der Auszugsrichtung und senkrecht zu der Hochrichtung elastisch verformbar. Der Rastabschnitt kann beispielsweise realisiert sein durch einen ausgedünnten Kunststoffabschnitt, welcher sich elastisch verformen lässt.

In einer Ausführungsform der Erfindung weist das Schienenelement zumindest an einem in der Auszugsrichtung ersten Ende eine Haltelasche auf und der Grundkörper des Schlittens weist eine Ausnehmung in einer Stirnseite des Grundkörpers auf, wobei die Haltelasche in den Zwischenraum zwischen den zwei Laufflächen hineinragt und wobei die Haltelasche und die Ausnehmung derart ausgestaltet und angeordnet sind, dass die Haltelasche in die Ausnehmung in dem Grundkörper des Schlittens eingreift, wenn der Schlitten das erste Ende erreicht, sodass der Schlitten nicht in einer Richtung senkrecht zu der Auszugsrichtung und senkrecht zu der Hochrichtung aus dem Schienenelement ausknüpfbar ist. Auf diese Weise ist eine Ausknüpfsicherung realisiert. Die Ausknüpfsicherung eignet sich insbesondere für Linearführungen mit hoher Dynamik oder zum Abtragen großer Lasten.

In einer weiteren Ausführungsform weist das Schienenelement an dem ersten Ende eine sich senkrecht zu der Auszugsrichtung des Schienenelements erstreckende Lasche auf, wobei die Lasche eine Aussparung aufweist und der Schlitten an seiner Stirnseite einen zu der Aussparung korrespondierenden Vorsprung aufweist und wobei die Aussparung und der Vorsprung derart ausgestaltet und angeordnet sind, dass der Vorsprung in die Aussparung in der Lasche eingreift, wenn der Schlitten das erste Ende erreicht, so dass der Schlitten nicht in einer Richtung senkrecht zu der Auszugsrichtung und senkrecht zu der Hochrichtung aus dem Schienenelement ausknüpfbar ist.

Während die Kombination aus Haltelasche und Loch, zunächst als Option für die erfindungsgemäße Linearführung betrachtet werden, bildet eine Linearführung mit einem Schlitten und einem Schienenelement, wobei der Schlitten das Loch aufweist und das Schienenelement die Haltelasche aufweist, so wie sie nachfolgend im Detail beschrieben werden, auch eine eigenständige Erfindung ohne, dass der Schlitten notwendigerweise die kennzeichnenden Merkmale des unabhängigen Anspruchs 1 dieser Anmeldung aufweist.

Die vorliegende Anmeldung betrifft daher auch eine Linearführung mit einem Schienenelement mit zwei zueinander hin zeigenden Laufflächen und einem Schlitten, wobei der Schlitten einen Grundkörper und eine Mehrzahl von Wälzkörpern aufweist, wobei die Mehrzahl von Wälzkörpern derart an dem Grundkörper aufgenommen ist, dass die Mehrzahl von Wälzkörpern auf den zweiten Laufflächen des Schienenelements abrollen, wobei der Grundkörper eine Position eines jeden aus der Mehrzahl von Wälzkörpern in der Auszugsrichtung relativ zu dem Grundkörper festlegt, wobei zumindest das Schienenelement zumindest an einem in der Auszugsrichtung ersten Ende eine Haltelasche aufweist und der Grundkörper des Schlittens ein Loch in einer Stirnseite des Grundkörpers aufweist, wobei die Haltelasche in den Zwischenraum zwischen den zwei Laufflächen hineinragt und wobei die Haltelasche und das Loch derart ausgestaltet und angeordnet sind, dass die Haltelasche in das Loch in dem Grundkörper des Schlittens eingreift wenn der Schlitten das erste Ende erreicht, so dass der Schlitten nicht in einer Richtung senkrecht zu der Auszugsrichtung und senkrecht zu der Hochrichtung aus dem Schienenelement ausknüpfbar ist oder das Schienenelement an dem ersten Ende eine sich senkrecht zu der Auszugsrichtung des Schienenelements erstreckende Lasche auf, wobei die Lasche eine Aussparung aufweist und der Schlitten an seiner Stirnseite einen zu der Aussparung korrespondierenden Vorsprung aufweist und wobei die Aussparung und der Vorsprung derart ausgestaltet und angeordnet sind, dass der Vorsprung in die Aussparung in der Lasche eingreift, wenn der Schlitten das erste Ende erreicht, so dass der Schlitten nicht in einer Richtung senkrecht zu der Auszugsrichtung und senkrecht zu der Hochrichtung aus dem Schienenelement ausknüpfbar ist.

In einer weiteren Ausführungsform der Erfindung weist das Schienenelement einen, vorzugsweise zumindest abschnittsweise aus Metall hergestellten, Schienenrücken auf, wobei das Schienenelement zumindest an einem in der Auszugsrichtung ersten Ende eine Haltelasche aufweist, wobei die Halteleiste derart gegenüber dem Schienenrücken abgebogen ist, dass die Haltelasche in den Zwischenraum zwischen den zwei Laufflächen hineinragt, wobei die Haltelasche und der Grundkörper derart ausgestaltet und angeordnet sind, dass der Grundkörper bei Erreichen des ersten Endes an die Haltelasche anschlägt. Eine derartige Haltelasche weist den Vorteil auf, dass sie hohe Kräfte in der Auszugsrichtung aufzunehmen vermag ohne dass der Grundkörper die Haltelasche in der Auszugsrichtung verbiegen oder umbiegen kann.

In einer Ausführungsform ist die Haltelasche derart gegenüber dem Schienenrücken abgebogen, dass die Haltelasche mit dem Schienenrücken einen Winkel von weniger als 90° einschließt. Eine solche Ausgestaltung der Haltelasche ist in der Lage große Kräfte in der Auszugsrichtung aufzunehmen.

Während diese, zunächst als Option für die erfindungsgemäße Linearführung betrachtet wird, bildet eine Linearführung mit einem Schlitten und einem Schienenelement, wobei das Schienenelement die derart ausgestaltete Haltelasche aufweist, so wie sie nachfolgend im Detail beschrieben wird, auch eine eigenständige Erfindung ohne, dass der Schlitten notwendigerweise die kennzeichnenden Merkmale des unabhängigen Anspruchs 1 dieser Anmeldung aufweist.

Die vorliegende Anmeldung betrifft daher auch eine Linearführung mit einem Schienenelement mit zwei zueinander hin zeigenden Laufflächen und einem Schlitten, wobei der Schlitten einen Grundkörper und eine Mehrzahl von Wälzkörpern aufweist, wobei die Mehrzahl von Wälzkörpern derart an dem Grundkörper aufgenommen ist, dass die Mehrzahl von Wälzkörpern auf den zweiten Laufflächen des Schienenelements abrollen, wobei der Grundkörper eine Position eines jeden aus der Mehrzahl von Wälzkörpern in der Auszugsrichtung relativ zu dem Grundkörper festlegt, das Schienenelement einen, vorzugsweise zumindest abschnittsweise aus Metall hergestellten, Schienenrücken auf, wobei das Schienenelement zumindest an einem in der Auszugsrichtung ersten Ende eine Haltelasche aufweist, wobei die Halteleiste derart gegenüber dem Schienenrücken abgebogen ist, dass die Haltelasche in den Zwischenraum zwischen den zwei Laufflächen hineinragt, wobei die Haltelasche und der Grundkörper derart ausgestaltet und angeordnet sind, dass der Grundkörper bei Erreichen des ersten Endes an die Haltelasche anschlägt, und wobei die Haltelasche vorzugsweise derart gegenüber dem Schienenrücken abgebogen ist, dass die Haltelasche mi dem Schienenrücken einen Winkel von weniger als 90° einschließt. Eine derartige Haltelasche weist den Vorteil auf, dass sie hohe Kräfte in der Auszugsrichtung aufzunehmen vermag ohne dass der Grundkörper die Haltelasche in der Auszugsrichtung verbiegen oder umbiegen kann.

In einer weiteren Ausführungsform der Erfindung ist an dem ersten Ende des Schienenelements zusätzlich zu der Haltelasche, so wie sie in Ausführungsformen davon zuvor beschrieben wurde, ein Anschlag vorgesehen, wobei an dem Schlitten oder an dem Anschlag ein elastisch verformbares Dämpfungselement vorgesehen ist, wobei der Schlitten, das Dämpfungselement und der Anschlag derart ausgestaltet und angeordnet sind, dass bei Erreichen des ersten Endes der Schlitten mit dem Dämpfungselement und das Dämpfungselement mit dem Anschlag in Eingriff kommt, sodass eine Auszugsbewegung des Schlittens relativ zu dem Schienenelement abgebremst wird, und wobei der Schlitten, das Dämpfungselement, der Anschlag und die Haltelasche derart ausgestaltet und angeordnet sind, dass nur bei Überschreiten einer durch das Dämpfungselement vorgegebenen Kraft der Schlitten mit der Haltelasche in Eingriff kommt.

Eine solche Ausführungsform ermöglicht einen für den Benutzer der Linearführung komfortablen Endanschlag beim Erreichen des ersten Endes des Schienenelements, welcher durch das Dämpfungselement gedämpft ist. Dabei wird gleichzeitig durch die Haltelasche bei Überschreiten einer durch das Dämpfungselement vorgegebenen Kraft ein Überlastanschlag bereitgestellt. Dieser Überlastanschlag stellt in einer Ausführungsform eine wirksame Begrenzung des Verschiebewegs des Schlittens gegenüber dem Schienenelement in der Auszugsrichtung bereit. In einer Ausführungsform stellt der Überlastanschlag alternativ oder zusätzlich eine Ausknüpfsicherung gegen ein Trennen des Schlittens von dem Schienenelement zur Verfügung.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische isometrische Ansicht einer Ausführungsform einer erfindungsgemäßen Linearführung.
- Figur 2: ist eine schematische seitliche Draufsicht auf die Linearführung aus Figur 1.
- Figur 3: ist eine Explosionsansicht des Schlittens aus den Figuren 1 und 2.
- Figur 4: ist eine schematische isometrische Ansicht einer weiteren Ausführungsform einer erfindungsgemäßen Linearführung.
- Figur 5: ist eine schematische isometrische Ansicht einer weiteren Ausführungsform eines Schienenelements für eine erfindungsgemäße Linearführung.
- Figur 6: ist eine schematische isometrische Ansicht von hinten auf eines Grundkörpers eines erfindungsgemäßen Schlittens.

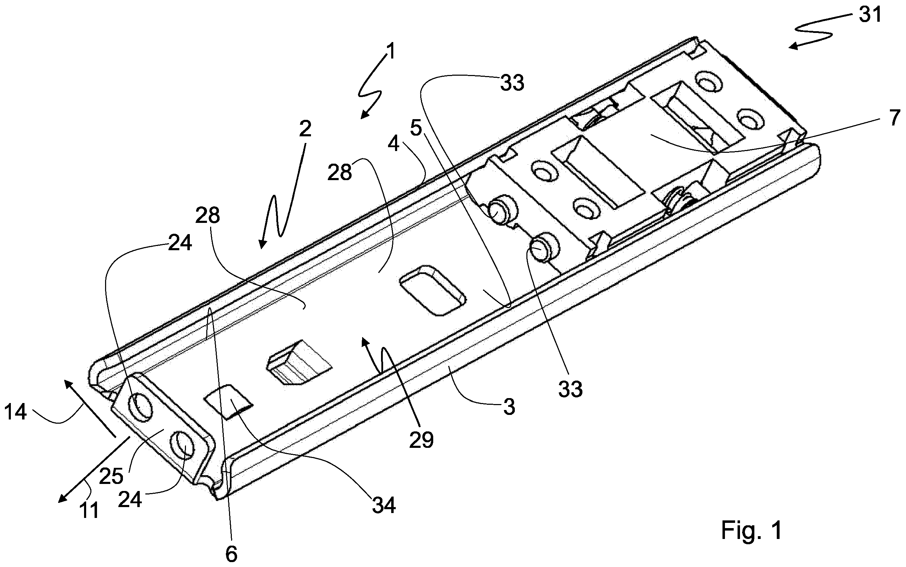

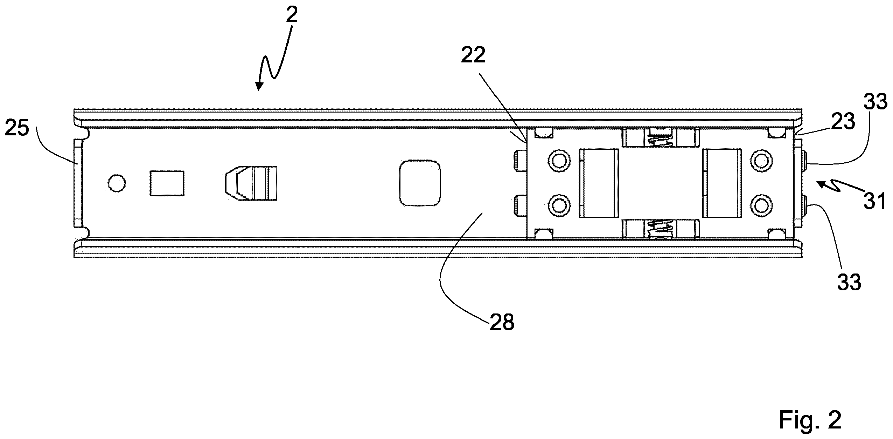

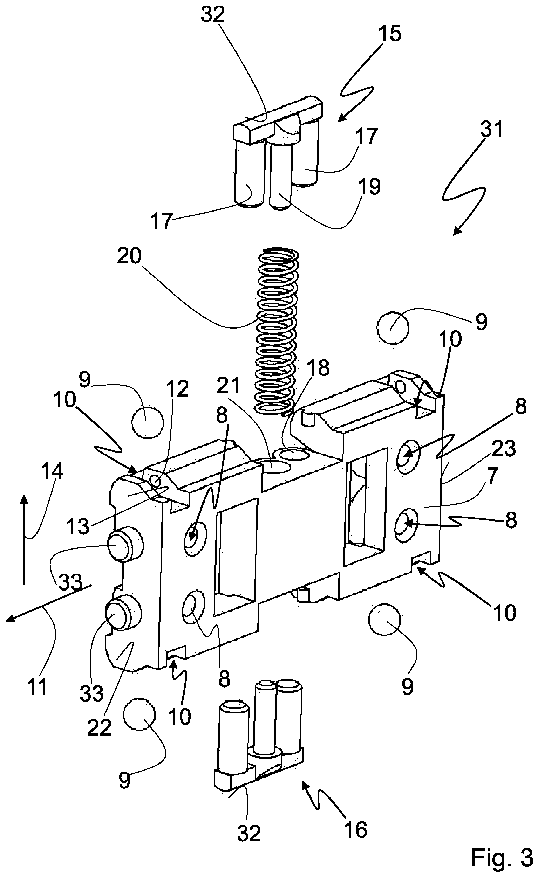

Figur 1 ist eine schematische isometrische Ansicht einer Ausführungsform einer Linearführung 1 mit einem Schienenelement 2 und einem Schlitten 31. Die gleiche Linearführung ist in einer seitlichen Draufsicht in Figur 2 gezeigt. Figur 3 zeigt den Schlitten 31 in einer Explosionsansicht.

Der Schlitten 31 und das Schienenelement 2 sind relativ zueinander verschiebbar aneinander gelagert. Im Querschnitt ist das Schienenelement 2 C-förmig ausgestaltet. Dabei weist das Schienenelement 2 zwei Schenkel 3, 4 auf. Jeder der beiden Schenkel 3, 4 hat jeweils eine Lauffläche 5, 6, wobei die beiden Laufflächen 5, 6 zueinander hin zeigen. Die beiden Schenkel 3, 4 sind mit einem Schienenrücken 28 miteinander verbunden. Der Schlitten 31 umfasst einen Grundkörper 7, welcher in der dargestellten Ausführungsform durch Spritzgießen aus Kunststoff hergestellt ist. In dem Grundkörper 7 sind Löcher 8 vorgesehen, um Elemente, welche nicht zur eigentlichen Linearführung gehören, wie beispielsweise eine Schublade in einem Kraftfahrzeug, an dem Grundkörper 7 des Schlittens 31 festzuschrauben.

Um eine Verschiebebewegung des Schlittens 31 gegenüber dem Schienenelement 2 mit einer möglichst geringen Reibung zu ermöglichen, sind insgesamt vier Kugeln 9 als Wälzkörper in entsprechenden Ausnehmungen 10 an dem Grundkörper 7 aufgenommen. Im zusammengefügten Zustand rollen diese Lagerkugeln 9 auf den Laufflächen 5, 6 der beiden Schenkel 3, 4 des Schienenelements 2 ab oder gleiten auf diesen Laufflächen 5, 6. Dabei sind die Kugeln 9 am Grundkörper 7 des Schlittens 31 nach Art eines Wälzkörperkäfigs bzw. Kugelkäfigs aufgenommen. D.h. der Grundkörper 7 definiert die Position der Kugeln 9 in der Auszugsrichtung 11. In der dargestellten Ausführungsform sind die Kugeln 9 innerhalb der Ausnehmungen 10 in Löchern 12 in den seitlichen Wandflächen 13 des Grundkörpers 7 aufgenommen, sodass die Kugeln 9 maximal einen kreisförmigen Linienkontakt mit dem Grundkörper 7 auf ihren rechten und linken Seiten haben, jedoch keinen vollflächigen Reibeingriff mit dem Grundkörper 7. Diese Konstruktion führt dazu, dass sich die Kugeln trotz ihrer Führung an dem Schlitten 31 mit geringer Rollreibung auf den Laufflächen 5, 6 des Schienenelements 2 abrollen. Allerdings führt diese Lagerung der Kugeln 9 an dem Grundkörper 7 des Schlittens 31 auch dazu, dass die Kugeln 9 in der Hochrichtung 14 ein Spiel aufweisen, sodass die Position des Schlittens 31 in der Hochrichtung nicht vollständig festgelegt ist. Dabei wird unter der Hochrichtung 14 eine Richtung parallel zum Schienenrücken 28 und senkrecht zu der Auszugsrichtung 11 verstanden.

Um dem entgegenzuwirken und um zusätzlich eine definierte Reibkraft zwischen dem Schlitten 31 und dem Schienenelement 2 bereitzustellen, weist der Schlitten 31 zwei Gleitelemente 15, 16 auf.

Jedes der beiden Gleitelemente 15, 16 verfügt über eine Gleitfläche 32, welche im verbauten Zustand des Schlittens 31 auf jeweils einer der Laufflächen 5, 6 des Schienenelements 2 gleitet und eine definierte Gleitreibung zwischen dem Schlitten 7 und dem Schienenelement 2 bereitstellt. Darüber hinaus verfügt jedes Gleitelement 16 über zwei zylindrische Führungsstifte 17. Diese Führungsstifte 17 greifen in zwei hohlzylindrische Lagerbuchsen 18 in dem Grundkörper 7 des Schlittens 31 ein. Auf diese Weise sind die Gleitelemente 15, 16 in der Hochrichtung 14 verschiebbar an dem Grundkörper 7 des Schlitten 31 gelagert, während die Kombination aus Führungsstiften 17 und Lagerbuchsen 18 eine Führung in der Auszugsrichtung 11 bereitstellt. Weiterhin weist jedes der Gleitelemente 15 eine Federaufnahme 19 in Form eines zylindrischen Stiftes auf.

An dem Schlitten 31 ist ferner ein Federelement in Form einer Spiralfeder 20 vorgesehen. Diese Spiralfeder 20 ist in einer Führungsbuchse 21 in der Seitenwand des Grundkörpers 7 des Schlittens 31 aufgenommen, wobei sich die Führungsbuchse 21 für die Spiralfeder 20 in der Hochrichtung 14 des Schlittens 31 erstreckt. Die Führungsbuchse 21 führt die Spiralfeder in einer Richtung parallel zur Auszugsrichtung. In der Hochrichtung 14 hingegen ist die Spiralfeder 20 in der Buchse 21 schwimmend gelagert. Im zusammengebauten Zustand greift der Aufnahmestift 19 in die Spiralfeder 20 ein. Daher spannt die Spiralfeder 20 die beiden Gleitelemente 15 mit der exakt gleichen Federkraft in Richtung auf die beiden Laufflächen 5, 6 des Schienenelements 2 hin vor. Die Federkraft, welche auf die Gleitelemente und damit auf die Laufflächen 5, 6 des Schienenelements 2 wirkt, ist unabhängig von der exakten Position des Schlittens 31 in der Hochrichtung 14 gegenüber dem Schienenelement 2.

An beiden Stirnflächen 22, 23 des Grundkörpers 7 des Schlittens 31 sind jeweils zwei zylindrische Ausknüpfsperren oder Vorsprünge 33 vorgesehen. Erreicht der Schlitten 31 das eine oder das andere Ende des Schienenelements 2, so greifen die Ausknüpfsperren 33 in dazu korrespondierende hohlzylindrische Aussparungen 24 in Endanschlaglaschen 25 des Schienenelements 2. In beiden Endpositionen ist der Schlitten 31 durch den Eingriff der Ausknüpfsperren 33 in die dazu komplementären Aussparungen 24 in den Laschen 25 gesichert.

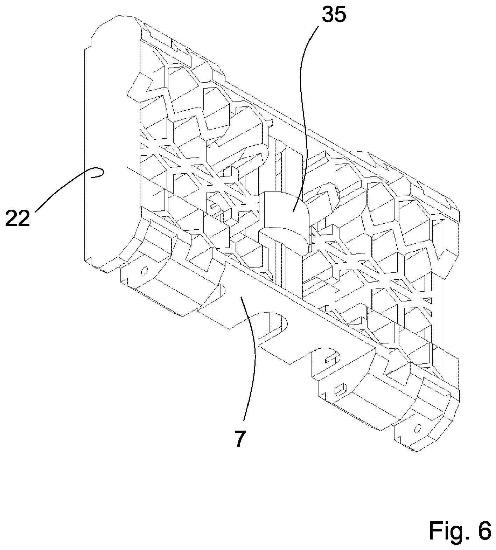

Ferner weist die Linearführung 1 gemäß den Figuren 1 bis 3 eine Raste auf, wobei die Raste aus einem Vorsprung 34 an dem Schienenelement 2 und einem Rastelement 35 besteht. Das Rastelement 35 ist in der rückwärtigen Ansicht eines Grundkörpers 7 eines Schlittens 31 aus Figur 6 gezeigt. Das Rastelement 35 ist auf der dem Schienenrücken 28 zugewandten Seite des Grundkörpers 7 des Schlittens 31 angeordnet. Bei dem Rastelement 35 handelt es sich um einen vorspringen Kunststoffabschnitt des Grundkörpers 7 des Schlittens 31. Das Rastelement 35 ist in der Hochrichtung 14 an der gleichen Position angeordnet, wie der Vorsprung 34 am Schienenrücken 28. Der Vorsprung 34 ist so ausgestaltet, dass er in den zwischen den Laufflächen 5, 6 gebildeten Zwischenraum 29 hineinragt. Kommt nun der Schlitten 31 in eine Position in der Auszugsrichtung 11, an der der Vorsprung 34 mit dem Rastelement 35 in Reibeingriff kommt, so verformt der Vorsprung 34 das Rastelement 35 elastisch und im Zusammenwirken legen der Vorsprung 34 und das Rastelement die Position des Schlittens 31 in der Auszugsrichtung 11 durch Verrasten fest. Ein Weiterbewegen des Schlittens 31 durch den Benutzer kann erst mit Überwinden der von dem Rastelement bereitgestellten Rastkraft erfolgen.

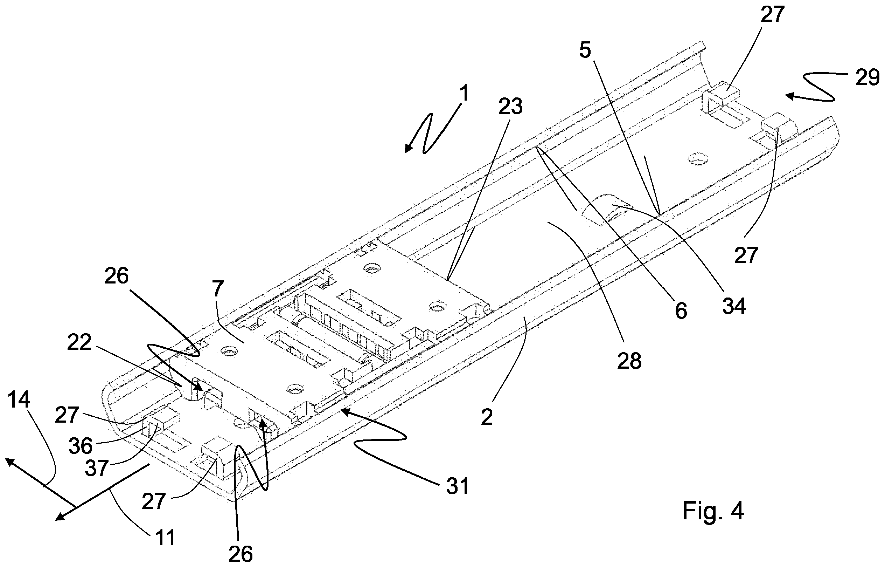

Figur 4 zeigt eine alternative Ausführungsform der Linearführung 1, welche sich durch die Ausgestaltung der Ausknüpfsicherung von der Ausführungsform gemäß den Figuren 1 bis 3 unterscheidet.

Die Ausknüpfsicherung wird in diesem Fall von jeweils zwei L-förmigen Ausnehmungen 26 in den Stirnflächen 22, 23 des Grundkörpers 7 des Schlittens 31 gebildet. Das Schienenelement 2 wiederum weist an jedem Ende jeweils zwei L-förmige Haltelaschen 27 als Teil der Ausknüpfsicherung auf. Die Haltelaschen 27 passen komplementär in die Ausnehmungen 26 in dem Grundkörper 7 des Schlittens 31.

In der dargestellten Ausführungsform ist das Schienenelement 2 aus einem abgebogenen Stahlblech gefertigt, sodass die Haltelaschen 27 durch teilweises Ausstanzen bzw. -schneiden und Abbiegen der Haltelaschen 27 gegenüber dem Schienenrücken 28 ausgebildet sind. Dabei sind die Haltelaschen 27 so gebogen, dass sie in den Zwischenraum 29 zwischen den Laufflächen 5, 6 des Schienenelements 2 hineinragen. Dabei erstreckt sich ein erster Schenkel 36 der L-förmigen Haltelasche 27 im Wesentlichen senkrecht zu dem Schienenrücken 28 und ein zweiter Schenkel 37 erstreckt sich Im Wesentlichen parallel zu dem Schienenrücken 28. In der Hochrichtung 14 sind die Haltelaschen 27 einerseits und die Aussparungen 26 in dem Grundkörper 7 des Schlittens 31 andererseits derart angeordnet, dass bei Erreichen des jeweiligen Endes des Schienenelements 2 die Haltelaschen 27 in die Ausnehmungen 26 eingreifen und auf diese Weise die zum Schienenrücken 28 parallelen Schenkel 37 der Haltelaschen 27 ein Ausknüpfen des Schlittens 31 aus dem Schienenelement 2 in einer Richtung senkrecht zur Auszugsrichtung 11 und senkrecht zur Hochrichtung 14 effektiv verhindern. Die Wechselwirkung der Haltelaschen 27 mit den Ausnehmungen 26 bildet zudem einen Endanschlag für den Schlitten beim Erreichen der Endpositionen an dem Schienenelement 2.

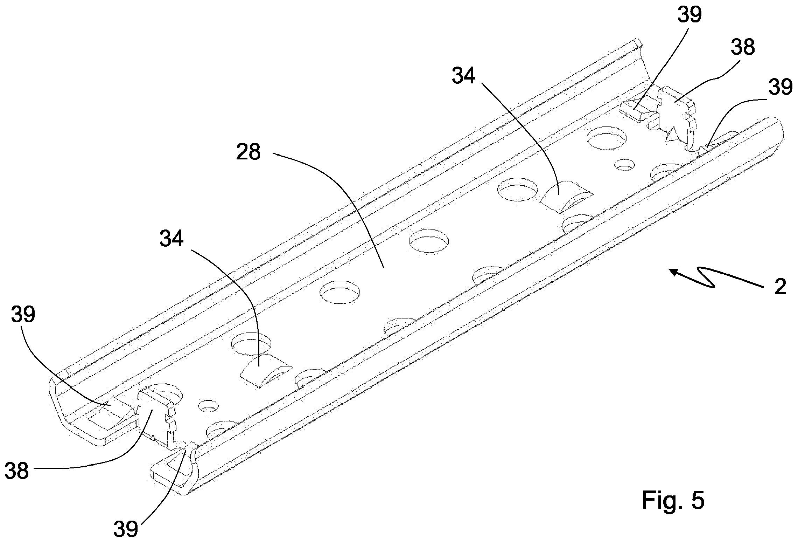

Figur 5 zeigt eine alternative Ausführungsform des Schienenelements 2 ohne Ausknüpfsicherung aber mit einem Endanschlag für den Schlitten bei Erreichen der Endposition des Schlittens. Der Endanschlag ist schienenseitig von einem Anschlag in Form einer senkrecht gegenüber dem Schienenrücken abgebogenen Anschlagslasche 38 gebildet. Auf diese Anschlaglasche wir eine Kappe (nicht dargestellt) aus einem elastisch verformbaren Material aufgesteckt. Auf diese Weise wird ein Anschlagen des Schlittens an die Anschlaglasche 38 gedämpft. In der üblichen Betriebssituation kann die Anschlaglasche 38 alle von dem Schlitten eingeleiteten Kräfte aufnehmen. Allerdings können Überlastsituationen auftreten, in denen die von dem Schlitten auf die Anschlaglasche 38 in der Auszugsrichtung 11 eingeleiteten Kräften zu einem Verbiegen der Anschlaglasche 38 führen würden. Daher ist zusätzlich zu der Anschlaglasche 38 ein Paar von Haltelaschen 39 an jedem Ende des Schienenelements 2 angeordnet. Die Haltelaschen sind ebenfalls aus dem Material des Schienenelements teilweise ausgestanzt und gegenüber dem Schienenrücken abgebogen. Dabei schließen die Haltelaschen 39 mit dem Schienenrücken 28 einen Winkel von weniger als 90° ein und Ihre abgebogenen Enden zeigen zum Schlitten hin. Aufgrund dieser Konstruktion können die Haltelaschen 39 deutlich höhere Kräfte aufnehmen als die unter einem Winkel von etwa 90° zum Schienenrücken 28 ausgerichteten Anschlaglaschen 38. Die Anschlaglaschen mit ihrem jeweiligen Dämpfer bewirken eine angenehme, gedämpfte Haptik beim Erreichen des Endes der Verschiebebewegung des Schlittens gegenüber dem Schienenelement 2. Damit diese Haptik in der normalen Betriebssituation nicht durch die Haltelaschen 39 und eine Anschlagen des Schlittens an diese gestört wird, sind der Schlitten 2, das Dämpfungselement, die Anschlaglasche 38 und die Haltelaschen 39 derart positioniert und ausgeformt, dass nur bei Überschreiten einer durch das Dämpfungselement vorgegebenen Kraft der Schlitten 31 an die Haltelaschen 39 anschlägt. Es kommt daher nur im Überlastfall zu einem harten Anschlagen des Schlittens 31 an das Schienenelement 2.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Linearführung
- 2: Schienenelement
- 3, 4: Schenkel
- 5: Lauffläche
- 6: Lauffläche
- 7: Grundkörper
- 8: Löcher
- 9: Kugeln
- 10: Ausnehmungen
- 11: Auszugsrichtung
- 12: Löcher
- 13: Wandflächen
- 14: Hochrichtung
- 15, 16: Gleitelement
- 17: Führungsstift
- 18: Lagerbuchse
- 19: Federaufnahme
- 20: Spiralfeder
- 21: Führungsbuchse
- 22, 23: Stirnfläche
- 24: Aussparung
- 25: Endanschlaglasche
- 26: Ausnehmung
- 27: Haltelaschen
- 28: Schienenrücken
- 29: Zwischenraum
- 31: Schlitten
- 32: Gleitfläche
- 33: Ausknüpfsperre
- 34: Vorsprung
- 35: Rastelement
- 36: erster Schenkel
- 37: zweiter Schenkel
- 38: Anschlaglasche
- 39: Haltelaschen

## Patentansprüche

1. Schlitten (31) für eine Linearführung (1), die den Schlitten (31) und ein Schienenelement (2) mit zwei zueinander hin zeigenden Laufflächen (5, 6) umfasst, wobei der Schlitten (31)
einen Grundkörper (7) und
eine Mehrzahl von Wälzkörpern (9) aufweist,
wobei die Mehrzahl von Wälzkörpern (9) derart an dem Grundkörper (7) aufgenommenen ist, dass die Mehrzahl von Wälzkörpern (9) zumindest auf den zwei Laufflächen (5, 6) abrollbar sind oder gegenüber den zwei Laufflächen (5, 6) eine Gleitbewegung ausführen,
wobei der Grundkörper (7) eine Position eines jeden aus der Mehrzahl von Wälzkörpern (9) in einer Auszugsrichtung (11) relativ zu dem Grundkörper (7) festlegt,
**dadurch gekennzeichnet, dass**
der Schlitten weiterhin
zwei Gleitelemente (15, 16) und
ein Federelement (20) aufweist,
wobei jedes der zwei Gleitelemente (15, 16) in einer Hochrichtung (14) senkrecht zu der Auszugsrichtung (11) beweglich an dem Grundkörper gelagert ist, so dass jedes der zwei Gleitelemente (15, 16) mit jeweils einer der Laufflächen (5, 6) in Reibeingriff bringbar ist, und
wobei das Federelement (20) derart an dem Grundkörper (7) gelagert ist, dass das Federelement (20) beide Gleitelemente (15, 16) in der Hochrichtung voneinander weg vorspannt.

2. Schlitten (31) nach dem vorhergehenden Anspruch, wobei das Federelement (20) in der Hochrichtung (14) schwimmend an dem Grundkörper (7) gelagert ist.

3. Schlitten (31) nach einem der vorhergehenden Ansprüche, wobei jedes der zwei Gleitelemente (15, 16) in der Auszugsrichtung (11), vorzugsweise symmetrisch, zwischen zwei Wälzkörpern (9) angeordnet ist.

4. Schlitten (31) nach einem der vorhergehenden Ansprüche, wobei jedes der zwei Gleitelemente (15, 16) einen T-förmigen Abschnitt aufweist, wobei ein Querbalken (32) des T-förmigen Abschnitts mit einer Lauffläche (5, 6) des Schienenelements (2) in Reibeingriff bringbar ist und ein vertikaler Balken (19) das Federelement (20) aufnimmt.

5. Schlitten (31) nach einem der vorhergehenden Ansprüche, wobei jedes der zwei Gleitelemente (15, 16) mindestens einen, vorzugsweise zylindrischen, Führungsstift (17) aufweist, wobei der Führungsstift (17) in jeweils eine, vorzugsweise hohlzylindrische, Führungsbuchse (21) in dem Grundkörper (7) des Schlittens (31) eingreift, so dass jedes der zwei Gleitelemente (15, 16) eine Führung in der Auszugsrichtung (11) erfährt, während es in der Hochrichtung (14) schwimmend gelagert ist.

6. Schlitten (31) nach einem der vorhergehenden Ansprüche, wobei das Federelement (20) eine Spiralfeder ist.

7. Schlitten (31) nach einem der vorhergehenden Ansprüche, wobei der Grundkörper (7), vorzugsweise einstückig, aus Kunststoff hergestellt ist.

8. Linearführung (1) mit
einem Schienenelement (2) mit zwei zueinander hin zeigenden Laufflächen (5, 6) und
einem Schlitten (31) nach einem der vorhergehenden Ansprüche,
wobei die Mehrzahl von Wälzkörpern (9) derart an dem Grundkörper (7) aufgenommenen ist, dass die Mehrzahl von Wälzkörpern (9) auf den Laufflächen (5, 6) abrollt oder gegenüber den Laufflächen (5, 6) eine Gleitbewegung ausführt, so dass der Schlitten (31) und das Schienenelement (2) in der Auszugsrichtung (11) linear gegeneinander verschiebbar sind,
wobei jedes der zwei Gleitelemente (15, 16) mit jeweils einer der Laufflächen (5, 6) in Reibeingriff ist.

9. Linearführung (1) nach dem vorhergehenden Anspruch, wobei das Schienenelement (2) einen Vorsprung (34) aufweist und der Grundkörper (7) einen Rastabschnitt (35) aufweist,
wobei der Vorsprung (34) derart angeordnet und ausgestaltet ist, dass er in einen Zwischenraum (29) zwischen den zwei Laufflächen (5, 6) hineinragt, wobei der Rastabschnitt (35) in einer Richtung senkrecht zu der Auszugsrichtung (11) elastisch verformbar ist und
wobei der Rastabschnitt (35) derart angeordnet ist, dass er in einer Position des Schlittens (31) in der Auszugsrichtung (11) relativ zu dem Schienenelement (2) mit dem Vorsprung (34) in Reibeingriff ist.

10. Linearführung (1) nach Anspruch 8 oder 9,
wobei zumindest das Schienenelement (2) zumindest an einem in der Auszugsrichtung (11) ersten Ende eine Haltelasche (27, 39) aufweist und der Grundkörper (7) des Schlittens (31) eine Ausnehmung (12, 26) in einer Stirnseite (22, 23) des Grundkörpers (7) aufweist,
wobei die Haltelasche (27, 39) in den Zwischenraum (29) zwischen den zwei Laufflächen (5, 6) hineinragt und
wobei die Haltelasche (27, 39) und die Ausnehmung (12, 26) derart ausgestaltet und angeordnet sind, dass die Haltelasche (27, 39) in die Ausnehmung (12, 26) in dem Grundkörper (7) des Schlittens (31) eingreift, wenn der Schlitten (31) das erste Ende erreicht, so dass der Schlitten (31) nicht in einer Richtung senkrecht zu der Auszugsrichtung (11) und senkrecht zu der Hochrichtung (14) aus dem Schienenelement (2) ausknüpfbar ist oder
das Schienenelement (2) zumindest an dem ersten Ende eine sich senkrecht zu der Auszugsrichtung (11) des Schienenelements (2) erstreckende Lasche (25) aufweist, wobei die Lasche (25) eine Aussparung (24) aufweist und der Schlitten (31) an seiner Stirnseite (22, 23) einen zu der Aussparung (24) korrespondierenden Vorsprung (33) aufweist und
wobei die Aussparung (24) und der Vorsprung (33) derart ausgestaltet und angeordnet sind, dass der Vorsprung (33) in die Aussparung (33) in der Lasche (25) eingreift, wenn der Schlitten (31) das erste Ende erreicht, so dass der Schlitten (31) nicht in einer Richtung senkrecht zu der Auszugsrichtung (11) und senkrecht zu der Hochrichtung (14) aus dem Schienenelement (2) ausknüpfbar ist.

11. Linearführung (1) nach einem der Ansprüche 8 bis 10, wobei
das Schienenelement (2) einen Schienenrücken (28) aufweist,
wobei das Schienenelement (2) zumindest an einem in der Auszugsrichtung (11) ersten Ende eine Haltelasche (27, 39) aufweist,
wobei die Haltelasche (27, 39) derart gegenüber dem Schienenrücken (28) abgebogen ist, dass die Haltelasche (27, 39) in den Zwischenraum (29) zwischen den zwei Laufflächen (5, 6) hineinragt,
wobei die Haltelasche (27, 39) und der Grundkörper (7) derart ausgestaltet und angeordnet sind, dass der Grundkörper (7) bei Erreichen des ersten Endes (an die Haltelasche (27, 39) anschlägt, und
wobei die Haltelasche (27, 39) vorzugsweise derart gegenüber dem Schienenrücken (28) abgebogen ist, das die Haltelasche (27, 39) mit dem Schienenrücken (28) einen Winkel von weniger als 90° einschließt.

12. Linearführung (1) nach Anspruch 10 oder 11, wobei
an dem ersten Ende des Schienenelements (2) zusätzlich zu der Haltelasche (27, 39) ein Anschlag (38) vorgehsehen ist,
wobei an dem Schlitten (31) oder an dem Anschlag (38) ein elastisch verformbares Dämpfungselement vorgesehen ist,
wobei der Schlitten (31), das Dämpfungselement und der Anschlag (38) derart ausgestaltet und angeordnet sind, dass bei Erreichen des ersten Endes der Schlitten (31) mit dem Dämpfungselement und das Dämpfungselement mit dem Anschlag (38) in Eingriff kommt, so dass eine Auszugsbewegung des Schlittens (31) relativ zu dem Schienenelement (2) abgebremst wird, und
wobei der Schlitten (2), das Dämpfungselement, der Anschlag (38) und die Haltelasche (27, 39) derart ausgestaltet und angeordnet sind, dass nur bei Überschreiten einer durch das Dämpfungselement vorgegebenen Kraft der Schlitten (31) mit der Haltelasche (27, 39) in Eingriff kommt.

## Claims

1. A slide (31) for a linear guide (1) which comprises the slide (31) and a rail element (2) having two running surfaces (5, 6) which face one another, wherein the slide (31) comprises
a main part (7), and
a plurality of rolling bodies (9),
wherein the plurality of rolling bodies (9) is received on the main part (7) such that the plurality of rolling bodies (9) can roll at least on the two running surfaces (5, 6) or carry out a sliding movement relative to the two running surfaces (5, 6),
wherein the main part (7) defines a position of each one of the plurality of rolling bodies (9) in a pull-out direction (11) relative to the main part (7),
**characterised in that**
the slide further comprises
two slide elements (15, 16), and
a spring element (20),
wherein each of the two slide elements (15, 16) is mounted on the main part such that it can move in a vertical direction (14) perpendicular to the pull-out direction (11) sothat each of the two slide elements (15, 16) can be brought into frictional engagement with a respective running surface (5, 6), and
wherein the spring element (20) is mounted on the main part (7) such that the spring element (20) biases the two slide elements (15, 16) away from one another in the vertical direction.

2. The slide (31) according to the preceding claim, wherein the spring element (20) is mounted on the main part (7) in a floating manner in the vertical direction (14).

3. The slide (31) according to any one of the preceding claims, wherein each of the two slide elements (15, 16) is located in the pull-out direction (11), preferably symmetrically, between two rolling bodies (9).

4. The slide (31) according to any one of the preceding claims, wherein each of the two slide elements (15, 16) comprises a T-shaped portion, wherein a crossbar (32) of the T-shaped portion can be brought into frictional engagement with a running surface (5, 6) of the rail element (2) and a vertical bar (19) receives the spring element (20).

5. The slide (31) according to any one of the preceding claims, wherein each of the two slide elements (15, 16) comprises at least one, preferably cylindrical, guide pin (17), wherein the guide pin (17) engages in a respective, preferably hollow cylindrical, guide bushing (21) in the main part (7) of the slide (31), so that each of the two slide elements (15, 16) is guided in the pull-out direction (11) while it is mounted in a floating manner in the vertical direction (14).

6. The slide (31) according to any one of the preceding claims, wherein the spring element (20) is a spiral spring.

7. The slide (31) according to any one of the preceding claims, wherein the main part (7) is made, preferably in one piece, of plastic.

8. A linear guide (1) comprising
a rail element (2) having two running surfaces (5, 6) which face one another, and
a slide (31) according to any one of the preceding claims,
wherein the plurality of rolling bodies (9) is received on the main part (7) such that the plurality of rolling bodies (9) rolls on the two running surfaces (5, 6) or carries out a sliding movement relative to the two running surfaces (5, 6), so that the slide (31) and the rail element (2) can be moved linearly relative to one another in the pull-out direction (11),
wherein each of the two slide elements (15, 16) is respectively in frictional engagement with one of the running surfaces (5, 6).

9. The linear guide (1) according to the preceding claim, wherein the rail element (2) comprises a projection (34) and the main part (7) comprises a latching portion (35),
wherein the projection (34) is disposed and configured such that it projects into an intermediate space (29) between the two running surfaces (5, 6),
wherein the latching portion (35) is elastically deformable in a direction perpendicular to the pull-out direction (11), and
wherein the latching portion (35) is disposed such that it is in frictional engagement with the projection (34) in a position of the slide (31) in the pull-out direction (11) relative to the rail element (2).

10. The linear guide (1) according to claim 8 or 9,
wherein at least the rail element (2) comprises a retaining tab (27, 39) at least on a first end in the pull-out direction (11), and
the main part (7) of the slide (31) comprises a recess (12, 26) in an end face (22, 23) of the main part (7),
wherein the retaining tab (27, 39) projects into the intermediate space (29) between the two running surfaces (5, 6), and
wherein the retaining tab (27, 39) and the recess (12, 26) are configured and disposed such that the retaining tab (27, 39) engages in the recess (12, 26) in the main part (7) of the slide (31) when the slide (31) reaches the first end, so that the slide (31) cannot be disengaged from the rail element (2) in a direction perpendicular to the pull-out direction (11) and perpendicular to the vertical direction (14) or,
at least at the first end, the rail element (2) comprises a tab (25) which extends perpendicular to the pull-out direction (11) of the rail element (2), wherein the tab (25) comprises a notch (24) and,
on its end face (22, 23), the slide (31) comprises a projection (33) which corresponds to the notch (24), and
wherein the notch (24) and the projection (33) are configured and disposed such that the projection (33) engages in the notch (33) in the tab (25) when the slide (31) reaches the first end, so that the slide (31) cannot be disengaged from the rail element (2) in a direction perpendicular to the pull-out direction (11) and perpendicular to the vertical direction (14).

11. The linear guide (1) according to any one of claims 8 to 10, wherein
the rail element (2) comprises a rail back (28),
wherein the rail element (2) comprises a retaining tab (27, 39) at least on a first end in the pull-out direction (11),
wherein the retaining tab (27, 39) is bent relative to the rail back (28) such that the retaining tab (27, 39) projects into the intermediate space (29) between the two running surfaces (5, 6),
wherein the retaining tab (27, 39) and the main part (7) are configured and disposed such that the main part (7) strikes the retaining tab (27, 39) when it reaches the first end, and
wherein the retaining tab (27, 39) is preferably bent relative to the rail back (28), such that the retaining tab (27, 39) includes an angle of less than 90° with the rail back (28).

12. The linear guide (1) according to claim 10 or 11, wherein
a stop (38) is provided on the first end of the rail element (2) in addition to the retaining tab (27, 39),
wherein an elastically deformable damping element is provided on the slide (31) or on the stop (38),
wherein the slide (31), the damping element and the stop (38) are configured and disposed such that, upon reaching the first end, the slide (31) comes into engagement with the damping element and the damping element comes into engagement with the stop (38), so that a pull-out movement of the slide (31) relative to the rail element (2) is braked, and
wherein the slide (2), the damping element, the stop (38) and the retaining tab (27, 39) are configured and disposed such that the slide (31) comes into engagement with the retaining tab (27, 39) only when a force predetermined by the damping element is exceeded.

## Revendications

1. Glissière (31) pour un guide linéaire (1) comprenant la glissière (31) et un élément rail (2) avec deux surfaces de roulement (5, 6) orientées l'une vers l'autre, la glissière (31) comprenant
une partie principale (7) et
une pluralité de corps de roulement (9),
la pluralité de corps de roulement (9) étant reçue sur la partie principale (7) de sorte que la pluralité de corps de roulement (9) puisse rouler au moins sur les deux surfaces de roulement (5, 6) ou effectuer un mouvement de coulissement par rapport aux deux surfaces de roulement (5, 6),
la partie principale (7) définissant une position de chacun de la pluralité de corps de roulement (9) dans une direction de retrait (11) par rapport à la partie principale (7),
**caractérisée en ce que**
la glissière comprend en outre
deux éléments coulissants (15, 16) et
un élément ressort (20),
chacun des deux éléments coulissants (15, 16) étant monté mobile sur la partie principale dans une direction verticale (14) perpendiculaire à la direction de retrait (11), de sorte que chacun des deux éléments coulissants (15, 16) puisse être mis en prise par frottement avec l'une des surfaces de roulement (5, 6), et
l'élément ressort (20) étant monté sur la partie principale (7) de sorte que l'élément ressort (20) sollicite les deux éléments coulissants (15, 16) à distance l'un de l'autre dans la direction verticale.

2. Glissière (31) selon la revendication précédente, l'élément ressort (20) étant monté flottant sur la partie principale (7) dans la direction verticale (14).

3. Glissière (31) selon l'une quelconque des revendications précédentes, chacun des deux éléments coulissants (15, 16) étant agencé dans la direction de retrait (11), de préférence de manière symétrique, entre deux corps de roulement (9).

4. Glissière (31) selon l'une quelconque des revendications précédentes, chacun des deux éléments coulissants (15, 16) comprenant une section en forme de T, une barre transversale (32) de la section en forme de T pouvant être mise en prise par frottement avec une surface de roulement (5, 6) de l'élément rail (2) et une barre verticale (19) recevant l'élément ressort (20).

5. Glissière (31) selon l'une quelconque des revendications précédentes, chacun des deux éléments coulissants (15, 16) comprenant au moins une broche de guidage (17), de préférence cylindrique, la broche de guidage (17) venant en prise respectivement dans une douille de guidage (21), de préférence cylindrique creuse, dans la partie principale (7) de la glissière (31), de sorte que chacun des deux éléments coulissants (15, 16) subisse un guidage dans la direction de retrait (11), alors qu'il est monté flottant dans la direction verticale (14).

6. Glissière (31) selon l'une quelconque des revendications précédentes, l'élément élastique (20) étant un ressort hélicoïdal.

7. Glissière (31) selon l'une quelconque des revendications précédentes, la partie principale (7) étant fabriquée en plastique, de préférence d'un seul tenant.

8. Guide linéaire (1) comprenant
un élément rail (2) avec deux surfaces de roulement (5, 6) orientées l'une vers l'autre, et
une glissière (31) selon l'une quelconque des revendications précédentes,
la pluralité de corps de roulement (9) étant reçue sur la partie principale (7) de sorte que la pluralité de corps de roulement (9) roule sur les surfaces de roulement (5, 6) ou effectue un mouvement de coulissement par rapport aux surfaces de roulement (5, 6) de sorte que la glissière (31) et l'élément rail (2) puissent être déplacés linéairement l'un par rapport à l'autre dans la direction de retrait (11),
chacun des deux éléments coulissants (15, 16) étant mis en prise par frottement avec l'une des surfaces de roulement (5, 6).

9. Guide linéaire (1) selon la revendication précédente, l'élément rail (2) comprenant une saillie (34) et la partie principale (7) comprenant une section d'encliquetage (35),
la saillie (34) étant agencée et conçue de sorte qu'elle pénètre dans un espace intermédiaire (29) entre les deux surfaces de roulement (5, 6), la section d'encliquetage (35) étant déformable élastiquement dans une direction perpendiculaire à la direction de retrait (11), et
la section d'encliquetage (35) étant agencée de sorte qu'elle soit mise en prise par frottement avec la saillie (34) dans une position de la glissière (31) dans la direction de retrait (11) par rapport à l'élément rail (2).

10. Guide linéaire (1) selon la revendication 8 ou 9,
au moins l'élément rail (2) comprenant une patte de retenue (27, 39) au moins à une première extrémité dans la direction de retrait (11) et
la partie principale (7) de la glissière (31) comprenant un évidement (12, 26) dans une face frontale (22, 23) de la partie principale (7),
la patte de retenue (27, 39) faisant saillie dans l'espace (29) entre les deux surfaces de roulement (5, 6), et
la patte de retenue (27, 39) et l'évidement (12, 26) étant conçus et agencés de sorte que la patte de retenue (27, 39) vienne en prise dans l'évidement (12, 26) dans la partie principale (7) de la glissière (31) lorsque la glissière (31) atteint la première extrémité, de sorte que la glissière (31) ne puisse pas être détachée de l'élément rail (2) dans une direction perpendiculaire à la direction de retrait (11) et perpendiculaire à la direction verticale (14), ou
l'élément rail (2) comprenant au moins à la première extrémité une patte (25) s'étendant perpendiculairement à la direction de retrait (11) de l'élément rail (2), la patte (25) comprenant un évidement (24), et
la glissière (31) comprenant sur sa face frontale (22, 23) une saillie (33) correspondant à l'évidement (24), et
l'évidement (24) et la saillie (33) étant conçus et agencés de sorte que la saillie (33) vienne en prise dans l'évidement (33) dans la patte (25) lorsque la glissière (31) atteint la première extrémité, de sorte que la glissière (31) ne puisse pas être détachée de l'élément rail (2) dans une direction perpendiculaire à la direction de retrait (11) et perpendiculaire à la direction verticale (14).

11. Guide linéaire (1) selon l'une quelconque des revendications 8 à 10,
l'élément rail (2) comprenant un dos de rail (28),
l'élément rail (2) comprenant une languette de retenue (27, 39) au moins à une première extrémité dans la direction de retrait (11),
la patte de retenue (27, 39) étant fléchie par rapport au dos du rail (28) de sorte que la patte de retenue (27, 39) fasse saillie dans l'espace (29) entre les deux surfaces de roulement (5, 6),
la patte de retenue (27, 39) et la partie principale (7) étant conçues et agencées de sorte que la partie principale (7) vienne en butée contre la patte de retenue (27, 39) lorsque la première extrémité est atteinte, et
la patte de retenue (27, 39) étant de préférence fléchie par rapport au dos de rail (28) de sorte que la patte de retenue (27, 39) forme un angle inférieur à 90° avec le dos de rail (28).

12. Guide linéaire (1) selon la revendication 10 ou 11,
une butée (38) étant prévue à la première extrémité de l'élément rail (2) en plus de la patte de retenue (27, 39),
un élément d'amortissement déformable élastiquement étant prévu sur la glissière (31) ou sur la butée (38),
la glissière (31), l'élément d'amortissement et la butée (38) étant conçus et agencés de sorte que lorsque la première extrémité est atteinte, la glissière (31) vienne en prise avec l'élément d'amortissement et l'élément d'amortissement vienne en prise avec la butée (38), de sorte qu'un déplacement de retrait de la glissière (31) par rapport à l'élément rail (2) soit freiné, et
la glissière (2), l'élément d'amortissement, la butée (38) et la patte de retenue (27, 39) étant conçus et agencés de sorte que la glissière (31) n'entre en contact avec la patte de retenue (27, 39) qu'en cas de dépassement d'une force prescrite par l'élément d'amortissement.
